# EUROPÄISCHE PATENTSCHRIFT

(11) **EP 3 542 997 B1**
(45) Veröffentlichungstag und Bekanntmachung des Hinweises auf die Patenterteilung: **16.08.2023**
(21) Anmeldenummer: 18163643.2
(22) Anmeldetag: 23.03.2018
(51) Int. Cl.: B29C 65/18, B65B 7/16, B29L 31/00, B65B 51/10

(54) **SIEGELVORRICHTUNG UND VERFAHREN ZUM SIEGELN EINES DECKMATERIALS AUF SIEGELBEREICHE EINER BLISTERBAHN ODER EINER BLISTERHAUBE**
SEALING DEVICE AND METHOD FOR SEALING A COVERING MATERIAL ON SEAL AREAS OF A BLISTER WEB OR A BLISTER HOOD
DISPOSITIF ET PROCÉDÉ DE SCELLAGE D'UN MATÉRIAU DE RECOUVREMENT SUR DES ZONES DE SCELLAGE D'UNE BANDE DE BLISTER OU D'UNE COQUE BLISTER

(43) Veröffentlichungstag der Anmeldung: 25.09.2019
(73) Patentinhaber: KOCH Pac-Systeme GmbH, 72285 Pfalzgrafenweiler (DE)
(72) Erfinder: Bitzer, Jürgen, 72160 Horb a. N. (DE); Dressle, Michael, 72213 Altensteig (DE); Rothfuß, Christian, 72270 Baiersbronn (DE)
(74) Vertreter: Wächter, Jochen

(56) Entgegenhaltungen:
- WO-A1-2011/120715
- WO-A1-2014/066030
- GB-A- 1 057 746
- US-A- 3 864 892

## Beschreibung

Die vorliegende Erfindung betrifft eine Siegelvorrichtung sowie ein Verfahren zum Siegeln eines Deckmaterials auf Siegelbereiche einer Blisterbahn oder einer Blisterhaube.

Bei der Verpackung von pharmazeutischen Produkten, wie etwa Tabletten oder Dragees, aber auch von kleineren medizinischen Geräten, wie etwa Einwegspritzen, kommen häufig sogenannte Blisterpackungen zum Einsatz. Blisterpackungen können einen einzelnen Napf oder eine Vielzahl von Näpfen zur Aufnahme der Produkte bzw. Geräte aufweisen. Üblicherweise werden zunächst Näpfe in eine Folienbahn eingeformt, das dabei entstehende Blisterband wird mit Produkten gefüllt und anschließend mit einem Deckmaterial, zumeist einer Deckfolie, versiegelt. Ebenso ist es möglich, das Blisterband zunächst in einzelne Blisterhauben zu separieren und jede Blisterhaube einzeln mit einem Deckmaterialabschnitt zu versiegeln. Siegelvorrichtungen sind beispielsweise aus WO2014/066030A1 oder WO2011/120715A1 bekannt.

Da in der pharmazeutischen Industrie sehr hohe Hygieneanforderungen gelten, muss die Sterilität der verpackten Produkte sichergestellt sein. Hierzu können die Produkte oder Geräte entweder vor oder nach dem Einbringen in die Verpackung sterilisiert werden. In dem Fall, bei dem das bereits verpackte Produkt, etwa durch Anwendung von Dampf, sterilisiert wird, muss die Verpackung gasdurchlässig sein, damit der Dampf zum Sterilisieren des Produktes in die Verpackung gelangen kann. Des Weiteren kann durch eine gasdurchlässige Verpackung das Auftreten von Kondensation in der Verpackung vermieden werden, was insbesondere zur Schaffung einer trockenen Atmosphäre für die Langzeitlagerung der pharmazeutischen Produkte entscheidend ist. Gleichzeitig muss jedoch auch sichergestellt sein, dass von außen kein Eindringen von kontaminierenden Mikroorganismen, wie etwa Bakteriensporen, durch die gasdurchlässige Verpackung hindurch erfolgt.

Mit Folien oder Vliesen, die durchlässig für Gase sind, jedoch undurchlässig für Flüssigkeiten, ist es möglich, das in der Blisterpackung angeordnete und versiegelte Produkt mittels Dampf zu sterilisieren, während gleichzeitig ein Eindringen von Keimen und Mikroorganismen verhindert wird. Ein aus dem Stand der Technik bekanntes Deckmaterial, das zum Versiegeln von Blisterpackungen verwendet wird und das sämtliche der oben genannten Eigenschaften aufweist, ist die unter dem Handelsnamen "Tyvek" vertriebene Membran des Herstellers Dupont. Die Dicke eines solchen Materials ist aus Gründen des speziellen Aufbaus extremen Schwankungen unterworfen, die mitunter bis zu 300% betragen können. Deshalb besteht beim Siegelvorgang das Problem, dass sich diese Materialien nicht gleichmäßig und zuverlässig über die zu erzeugende Siegelnaht versiegeln lassen.

Es ist daher die Aufgabe der vorliegenden Erfindung, eine im Aufbau einfache Siegelvorrichtung und ein dazugehöriges Siegelverfahren vorzuschlagen, mit welchen ein Deckmaterial mit schwankender Dicke zuverlässig auf ein Blisterband oder eine Blisterhaube aufgesiegelt werden kann.

Diese Aufgabe wird durch die Merkmale der Ansprüche 1 und 13 gelöst.

Die erfindungsgemäße Siegelvorrichtung dient zum Siegeln eines Deckmaterials auf Siegelbereiche einer Blisterbahn oder mindestens einer Blisterhaube, wobei die Siegelbereiche der Blisterbahn oder der mindestens einen Blisterhaube mindestens einen Napf zur Aufnahme eines Produkts umgeben. Die Siegelvorrichtung umfasst ein erstes, beheiztes Siegelwerkzeug und ein zweites Siegelwerkzeug, das mindestens eine Mulde zur Aufnahme von mindestens einem Napf der Blisterbahn oder der mindestens einen Blisterhaube aufweist, wobei das erste Siegelwerkzeug und das zweite Siegelwerkzeug einander gegenüberliegend angeordnet sind. Außerdem weist die Siegelvorrichtung ein erstes Zwischenelement aus einem elastischen Material, das an der dem zweiten Siegelwerkzeug zugewandten Seite an dem ersten Siegelwerkzeug angebracht ist, und ein zweites Zwischenelement aus einem wärmeisolierenden oder schlecht wärmeleitenden Material, das von dem Material des ersten Zwischenelements verschieden ist, auf, wobei das zweite Zwischenelement an der dem ersten Siegelwerkzeug zugewandten Seite an dem zweiten Siegelwerkzeug angebracht ist. Das erste Siegelwerkzeug mit dem ersten Zwischenelement und das zweite Siegelwerkzeug mit dem zweiten Zwischenelement sind relativ zueinander zwischen einer geöffneten Position, in der sie zur Aufnahme der Blisterbahn oder der mindestens einen Blisterhaube und mindestens eines Abschnitts des Deckmaterials voneinander beabstandet sind, und einer geschlossenen Siegelposition, in der zumindest Abschnitte des ersten Zwischenelements und des zweiten Zwischenelements Druck aufeinander ausüben, bewegbar.

Es hat sich gezeigt, dass zum Erreichen einer möglichst gleichmäßig breiten Siegelnaht und einer gleichmäßig festen Verhaftung von Deckmaterial schwankender Dicke mit dem Blisterband oder der Blisterhaube sowohl ein gleichmäßig festes Andrücken über die gesamte Siegelfläche als auch eine möglichst gleichmäßig hohe Siegeltemperatur erforderlich ist. Bei der erfindungsgemäßen Siegelvorrichtung arbeiten das erste Siegelwerkzeug mit dem daran befestigten elastischen ersten Zwischenelement und das zweite Siegelwerkzeug mit dem daran befestigten wärmeisolierenden zweiten Zwischenelement in vorteilhafter Weise derart zusammen, dass das erste, elastische Zwischenelement die auftretenden Dickenunterschiede des Deckmaterials ausgleicht, während das zweite, wärmeisolierende Zwischenelement verhindert, dass die an der Siegelnaht applizierte Wärme wieder über das zweite Siegelwerkzeug, das zumeist aus Aluminium besteht, abgeführt wird. Damit kann das Deckmaterial mit einer gleichmäßig hohen Siegeltemperatur mit dem Blisterband oder der Blisterhaube versiegelt werden.

Bei dieser Ausgestaltung können die Abschnitte des Deckmaterials und der Blisterbahn oder Blisterhaube beim Siegeln mit ausreichender Andruckkraft zur Erreichung einer festen Siegelverbindung gegeneinander gepresst werden. Während die Siegelvorrichtung in der geöffneten Stellung angeordnet ist, kann das vorher erwärmte erste Zwischenelement abkühlen, sodass eine Überhitzung des elastischen Materials und damit ein frühzeitiger Verschleiß des ersten Zwischenelements verhindert werden.

Bevorzugt sind die einander zugewandten Flächen des ersten Siegelwerkzeugs und des zweiten Siegelements ebene, parallele Flächen, auf denen die Zwischenelemente angeordnet sind.

Erfindungsgemäß besteht das erste Zwischenelement aus einem Silikon-Elastomer. Das Silikon-Elastomer hat den Vorteil, dass es bis 200°C temperaturbeständig ist und die Materialeigenschaften, insbesondere die Elastizität, des Silikon-Elastomers im Bereich der Siegeltemperaturen weitgehend temperaturunabhängig sind.

Erfindungsgemäß hat das erste Zwischenelement eine Dicke von 0,3 mm bis 2 mm, und mehr bevorzugt von 0,5 mm bis 1 mm. Der angegebene Dickenbereich ist so ausgelegt, dass das erste Zwischenelement die Dickenunterschiede des Deckmaterials ausgleicht und dennoch aufgrund der geringen Schichtdicke schnell erwärmbar ist.

Bei einer bevorzugten Ausgestaltung hat das erste Zwischenelement eine Shore-Härte von 60 bis 80 Shore A, mehr bevorzugt von 65 bis 75 Shore A, gemessen nach DIN 53 505. Damit wird gewährleistet, dass genügend Druck auf das Deckmaterial ausgeübt wird, aber gleichzeitig eine ausreichende Elastizität zum Ausgleich der Unterschiede in der Dicke des Deckmaterials vorliegt.

Wenn das erste Zwischenelement an der Oberfläche des ersten Siegelwerkzeugs angegossen ist, ergibt sich eine zum Zwecke der Wärmeübertragung von dem ersten Siegelwerkzeug zum ersten Zwischenelement optimale Verbindung, die eine gleichmäßig über die Fläche des ersten Zwischenelements verteilte Wärmeübertragung sicherstellt. Es wird von keinerlei zusätzlichen Verbindungselementen, die unerwünschte Wärmebrücken schaffen, Gebrauch gemacht. Um eine möglichst große Fläche zum Angießen zu schaffen, kann die dem zweiten Siegelwerkzeug zugewandte Fläche des ersten Siegelwerkzeugs mit einer Riffelung versehen sein. Durch die erhöhte Verbindungsfläche ist die Wärmeübertragung von dem beheizten ersten Siegelwerkzeug zu dem ersten Zwischenelement verbessert, ebenso die Haftung.

Weiterhin besteht das zweite Zwischenelement vorzugsweise aus einem Polyurethan-Elastomer.

Das zweite Zwischenelement hat eine Dicke von 5 mm bis 15 mm, mehr bevorzugt von 8 mm bis 12 mm.

Bevorzugt besitzt das zweite Zwischenelement eine Shore-Härte von 80 bis 100 Shore A, mehr bevorzugt 85 bis 95 Shore A, gemessen nach DIN 53 505. Damit ist noch eine gewisse Elastizität gegeben, während eine ausreichende Druckkraft auf die Siegelstelle ausgeübt wird.

Bevorzugt ist die Wärmeleitfähigkeit des Materials des ersten Zwischenelements größer als die Wärmeleitfähigkeit des Materials des zweiten Zwischenelements.

Das Materials des zweiten Zwischenelements hat vorzugsweise eine Wärmeleitfähigkeit zwischen 0,19 W/(m·K) und 0,25 W/(m·K), mehr bevorzugt zwischen 0,21 W/(m·K) und 0,23 W/(m·K). Damit lassen sich optimale Siegelergebnisse erzielen.

Wenn das erste Siegelwerkzeug oberhalb des zweiten Siegelwerkzeugs angeordnet ist, kann ein entsprechender Abschnitt des Blisterbands oder der Blisterhaube zunächst auf das härtere, untere zweite Zwischenelement aufgelegt werden. Das erste Zwischenelement kann dann sukzessive an das Deckmaterial heranbewegt werden und dieses gegen das Blisterband oder die Blisterhaube drücken. Hierdurch kann ein kontinuierlicher Ausgleichsvorgang der unterschiedlichen Dicken des Deckmaterials unmittelbar durch das erste Zwischenelement erfolgen. Dies kann unter gleichzeitiger Erwärmung des Deckmaterials während des Andrückens durch das erste Zwischenelement geschehen.

Des Weiteren ist es von Vorteil, wenn das zweite Zwischenelement an dem zweiten Siegelwerkzeug verschraubt oder verrastet ist. Aufgrund der benötigten elastischen Härte des zweiten Zwischenelements und der gegenüber dem ersten Zwischenelement größeren Schichtdicke ist eine Verschraubung oder eine mechanische Verrastung möglich.

Gemäß einer weiteren vorteilhaften Ausgestaltung weist das erste Zwischenelement mindestens eine Durchgangsöffnung auf, die in Übereinstimmung mit der mindestens einen Mulde in dem zweiten Siegelwerkzeug gebildet ist, und das zweite Zwischenelement weist ebenfalls mindestens eine Durchgangsöffnung auf. Dabei bilden das erste Zwischenelement und das zweite Zwischenelement jeweils mindestens einen umlaufenden Steg. Die umlaufenden Stege sind entsprechend dem Verlauf der zu bildenden umlaufenden Siegelnaht gebildet. Damit können das Erwärmen und das Andrücken des Deckmaterials an den Abschnitt der Blisterbahn oder der Blisterhaube gezielt ausschließlich entlang der zu bildenden Siegelnaht erfolgen. Ein Erwärmen des Deckmaterials im Bereich der Mulden des Blisters findet nicht statt, d.h. das Deckmaterial wird in diesem Bereich geschont.

Alternativ kann das erste Zwischenelement plattenförmig ausgebildet sein. In diesem Fall ist es vorzugsweise einstückig und besitzt keine Durchgangsöffnung. Der Vorteil dieser Ausgestaltung ist die einfachere Herstellung und Aufbringung des ersten Zwischenelements.

Das erfindungsgemäße Verfahren zum Siegeln eines Deckmaterials auf Siegelbereiche einer Blisterbahn oder mindestens einer Blisterhaube, wobei die Siegelbereiche der Blisterbahn oder der mindestens einen Blisterhaube mindestens einen Napf zur Aufnahme eines Produkts umgeben, umfasst folgende Schritte:
- Bereitstellen einer erfindungsgemäßen Siegelvorrichtung;
- Anordnen eines Abschnitts der Blisterbahn oder der mindestens einen Blisterhaube und mindestens eines Abschnitts des Deckmaterials zwischen dem ersten Siegelwerkzeug und dem zweiten Siegelwerkzeug, während diese in einer geöffneten Position angeordnet sind;
- Betätigen der Siegelvorrichtung, um das erste Siegelwerkzeug und das zweite Siegelwerkzeug relativ zueinander in eine geschlossene Siegelposition zu bringen, in der das erste Zwischenelement an dem Deckmaterial anliegt und das zweite Zwischenelement an den Stegen der Blisterbahn oder der Blisterhaube anliegt, wodurch im Bereich korrespondierender Abschnitte des ersten und zweiten Zwischenelements das Deckmaterial an die Stege der Blisterbahn oder der Blisterhaube gedrückt wird;
- Erwärmen des ersten Siegelwerkzeugs und des ersten Zwischenelements während oder nach dem Schritt des Betätigens der Siegelvorrichtung, dadurch Erwärmen des Deckmaterials zum Versiegeln des Deckmaterials mit den Stegen der Blisterbahn oder der Blisterhaube; und
- Betätigen der Siegelvorrichtung, um das erste Siegelwerkzeug und das zweite Siegelwerkzeug relativ zueinander wieder in die geöffnete Position zu bringen.

Bei diesem Verfahren erfolgt zum Erreichen einer möglichst gleichmäßig breiten Siegelnaht und zum Erreichen einer gleichmäßig festen Verhaftung des Deckmaterials mit dem Blisterband oder der Blisterhaube ein gleichmäßiges Andrücken über die gesamte Siegelfläche insofern, als dass sich das erwärmte, elastische erste Zwischenelement direkt an das mit schwankender Dicke ausgebildete Deckmaterial anschmiegen kann. Das Anschmiegen und das Erwärmen erfolgen durch ein und dasselbe Element, nämlich durch das erste Zwischenelement. Beim Kontaktieren des Deckmaterials an dickeren Abschnitten wird das erste Zwischenelement mehr komprimiert als an dünneren Abschnitten des Deckmaterials, sodass schließlich dickere und dünnere Abschnitte im Wesentlichen mit einer gleich großen Andruckkraft beaufschlagt werden und das Deckmaterial gleichmäßig entlang der Siegelnaht mit dem Blisterband oder der Blisterhaube versiegelt werden kann. Des Weiteren erfolgt gleichzeitig ein Rückstau der Wärme durch das wärmeisolierende zweite Zwischenelement, sodass die Wärmeenergie im Wesentlichen für den Siegelvorgang zur Verfügung steht und nicht abfließt.

Vorzugsweise wird zum Anordnen des ersten Siegelwerkzeugs und des zweiten Siegelwerkzeugs in der Siegelposition nur das erste Siegelwerkzeug in Richtung des zweiten Siegelwerkzeugs bewegt, während das zweite Siegelwerkzeug ortsfest ist. Eine vorteilhafte Abfolge der einzelnen Verfahrensschritte wird somit insofern erreicht, als dass ein Abschnitt des Blisters zunächst durch Auflage an dem zweiten, ortsfesten Siegelwerkzeug fixiert wird und anschließend der Andruck- und Siegelvorgang erfolgt. Der Siegelvorgang kann somit präzise durchgeführt werden.

Es ist bevorzugt, wenn das erste Zwischenelement auf eine Temperatur von zwischen 120°C und 170°C, vorzugsweise zwischen 145°C und 155°C aufgeheizt wird. Damit lassen sich optimale Siegelergebnisse erzielen.

Weitere Merkmale und Vorteile der vorliegenden Erfindung werden unter Bezugnahme auf die Zeichnungen beschrieben.
- Fig. 1: ist eine schematische Perspektivansicht einer erfindungsgemäßen Siegelvorrichtung gemäß einer ersten Ausführungsform;
- Fig. 2: ist eine schematische Querschnittsansicht eines Abschnitts der Siegelvorrichtung aus Fig. 1, wobei die Siegelvorrichtung in der geöffneten Position zu sehen ist;
- Fig. 3: ist eine schematische Querschnittsansicht eines Abschnitts der Siegelvorrichtung aus Fig. 1, wobei die Siegelvorrichtung in der geschlossenen Siegelposition zu sehen ist; und
- Fig. 4: ist eine schematische Perspektivansicht einer erfindungsgemäßen Siegelvorrichtung gemäß einer zweiten Ausführungsform.

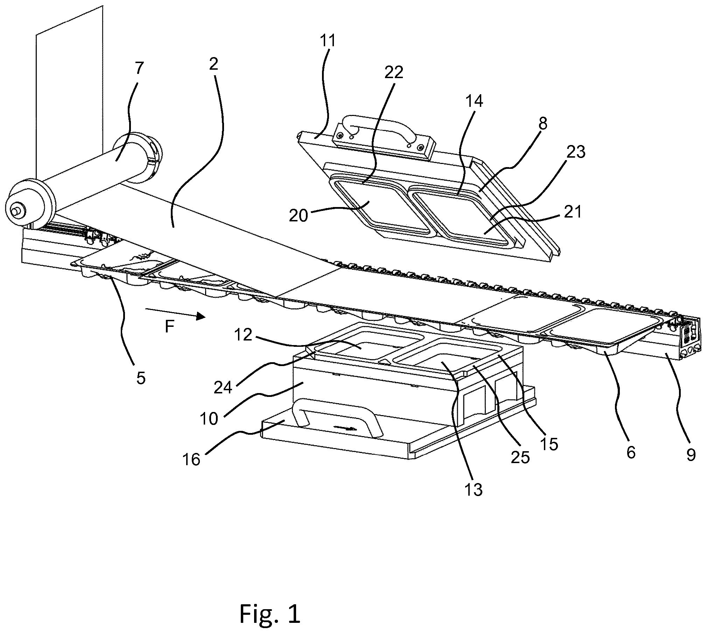

Fig. 1 zeigt in einer schematischen Perspektivansicht den prinzipiellen Aufbau eines Ausschnitts einer Verpackungsanlage mit einer Ausführungsform der erfindungsgemäßen Siegelvorrichtung. Wie Fig. 1 zu entnehmen ist, wird ein durchgängiges Blisterband 5 mit mehreren darin gebildeten Näpfen 6, die mit bevorzugt medizinischen oder pharmazeutischen Produkten (nicht gezeigt) gefüllt sind, vorzugsweise getaktet in einer Förderrichtung F bewegt und der Siegelvorrichtung zugeführt. Ein Deckmaterial 2, das zum Versiegeln der Näpfe 6 dient, wird in Form einer kontinuierlichen Bahn über eine Umlenkwalze 7 umgelenkt und ebenfalls vorzugsweise getaktet in Förderrichtung F bewegt. In der Siegelvorrichtung werden Blisterbahn 5 und Deckmaterial 2 zwischen ein erstes, oberes Siegelwerkzeug 8 und ein zweites, unteres Siegelwerkzeug 10 geführt. Der Transport von Blisterband 5 und Deckmaterial 2 erfolgt vorzugsweise mit derselben Vorschubvorrichtung 9, besonders bevorzugt mittels einer nach der Siegelvorrichtung angeordneten Vorschubvorrichtung 9. Mit dieser Vorschubvorrichtung 9 wird die Blisterbahn 5 zusammen mit dem Deckmaterial 2 in Förderrichtung F gezogen, weil Blisterbahn 5 und Deckmaterial 2 bereits durch den zeitlich vorangegangenen Siegelprozess vereint wurden. Dadurch gelangen noch nicht versiegelte Abschnitte von Blisterbahn 5 und Deckmaterial 2 in die Siegelvorrichtung. Es sind aber auch viele andere Arten und Anordnungen von Vorschubvorrichtungen anwendbar.

Die Siegelvorrichtung bildet einen Teil einer Verpackungsanlage, die weitere hier nicht dargestellte Stationen und Einrichtungen wie etwa eine Formstation zum Formen der Näpfe 6 im Blisterband 5, eine Füllstation zum Befüllen der Näpfe 6 mit Produkten, eine Stanzstation sowie Förder- und Übertragungseinrichtungen etc. umfassen kann. In der Siegelvorrichtung wird der mit Produkten bestückte Abschnitt der Blisterbahn 5 mit dem Deckmaterial 2 verschlossen. Der Siegelvorgang erfolgt durch Anwendung von Wärme, wobei das Deckmaterial 2 bevorzugt an einer Siegelnaht, die um jeden Napf 6 herum verläuft, mit der Blisterbahn 5 versiegelt wird.

Das Deckmaterial 2 kann eine Folie, ein Vlies, ein medizinisches Papier oder eine Kombination von zwei oder mehr daraus sein, gegebenenfalls mit schwankender Dicke. Das Deckmaterial 2 ist bevorzugt durchlässig für Gase, jedoch undurchlässig für Flüssigkeiten. Das Deckmaterial 2 kombiniert vorzugsweise die Eigenschaften einer herkömmlichen Aluminium- oder Kunststofffolie mit Materialeigenschaften von Papier und Textil. Die Herstellung eines möglichen Deckmaterials 2 erfolgt unter Anwendung eines Verdampfungs-Spinnvliesverfahrens, bei dem zunächst ein dreidimensionales Netz aus feinen Fasern entsteht, das anschließend durch mechanische Einwirkung in eine isotrope Faseranordnung überführt wird. Mittels Hitze und Druck werden schließlich die einzelnen Faserschichten verfestigt. Weitere Behandlungsschritte, wie etwa das Aufbringen von weiteren Beschichtungen, Corona-Bestrahlung, etc. sind optional möglich. Bedingt durch die spezielle Art der Herstellung ergeben sich Dickenschwankungen des Deckmaterials, teilweise von bis zu 300%. Ein Beispiel für ein solches Deckmaterial 2 wird unter der Bezeichnung "Tyvek" von der Firma Dupont hergestellt und vertrieben.

Wie in Fig. 1 zu sehen ist, umfasst die erfindungsgemäße Siegelvorrichtung das erste Siegelwerkzeug 8 und das zweite Siegelwerkzeug 10, wobei das erste Siegelwerkzeug 8 bevorzugt oberhalb des zweiten Siegelwerkzeugs 10 angeordnet ist. Das erste Siegelwerkzeug 8 ist ein beheiztes Siegelwerkzeug. Durch eine (nicht gezeigte) Heizvorrichtung, bei der es sich um eine Heizpatrone, um eine Heizplatte, eine Induktionsheizung etc. handeln kann, wird das erste Siegelwerkzeug 8 beheizt. Eine (nicht gezeigte) Steuereinrichtung steuert den Betrieb der Heizeinrichtung. Demgegenüber ist das zweite Siegelwerkzeug 10 vorzugsweise nicht beheizt und weist eine oder mehrere Mulden 12, 13 zur Aufnahme einer entsprechenden Anzahl von Näpfen 6 der Blisterbahn 5 auf.

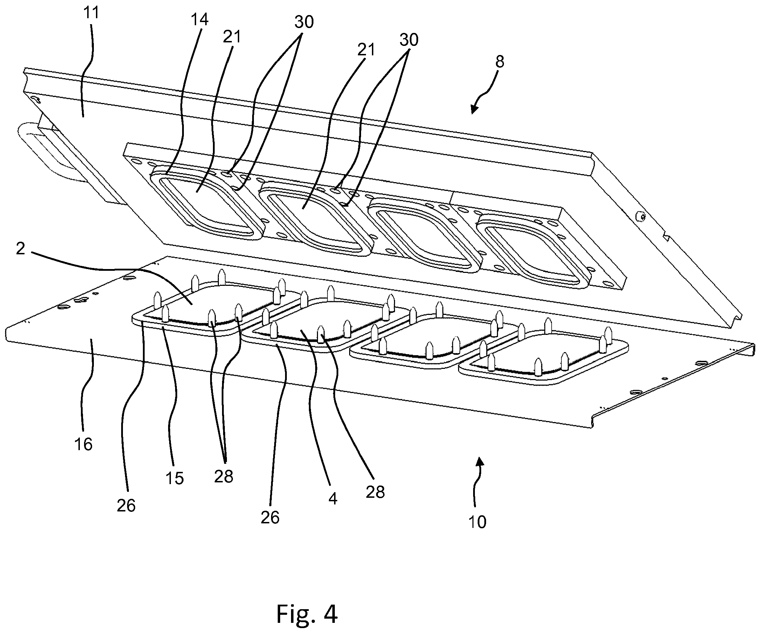

In Fig. 1 (und ebenso in der Darstellung einer anderen Ausführungsform in Fig. 4) ist das obere Siegelwerkzeug 8 nach oben verschwenkt dargestellt, um den Aufbau seiner Unterseite freizulegen. Dies dient lediglich der besseren Darstellung von Details, stellt aber keinen in der Realität auftretenden Zustand dar. Das obere und untere Siegelwerkzeug 8, 10 sind im eingebauten Betriebszustand immer parallel zueinander ausgerichtet.

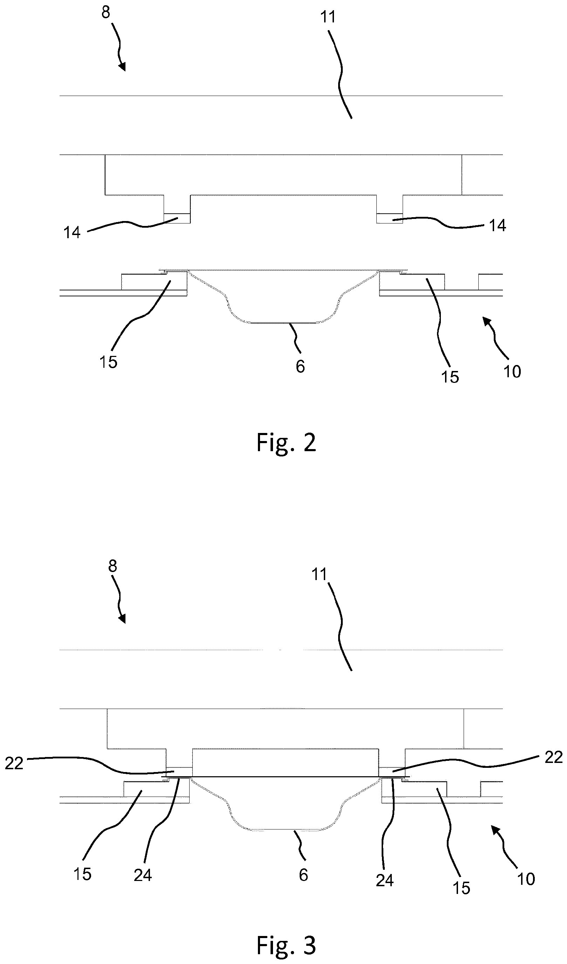

Fig. 2 zeigt eine Situation, in der das erste Siegelwerkzeug 8 und das zweite Siegelwerkzeug 10 einander gegenüberliegend und voneinander beabstandet angeordnet sind. An der dem zweiten Siegelwerkzeug 10 zugewandten Seite des ersten Siegelwerkzeugs 8 ist ein erstes Zwischenelement 14 angebracht. Das erste Siegelwerkzeug 8 fungiert zusammen mit dem ersten Zwischenelement 14 als ein wärmeaktives Element, wobei vorzugsweise das beheizte Siegelwerkzeug 8 das erste Zwischenelement 14 auf die Siegeltemperatur erwärmt.

An der dem ersten Siegelwerkzeug 8 zugewandten Seite des zweiten Siegelwerkzeugs 10 ist ein zweites Zwischenelement 15 angebracht. Dabei fungiert das zweite Siegelwerkzeug 10 mit dem zweiten Zwischenelement 15 als ein Gegenelement, an dem ein Abschnitt der Blisterbahn 5 anliegt. Gemäß Fig. 1 weisen das erste und das zweite Siegelwerkzeug 8, 10 Grundplatten 11, 16 auf, an denen die Zwischenelemente 14, 15 angebracht sind. Die Grundplatten 11, 16 können auch aus mehreren Elementen, Platten und/oder Schichten zusammengesetzt sein. Für den konkreten Aufbau der Grundplatten 11, 16, die im Rahmen der Erfindung verwendet werden können, existieren für den Fachmann viele Möglichkeiten.

Vorzugsweise ist das erste Zwischenelement 14 an dem ersten Siegelwerkzeug 8 so angebracht, dass beim Erwärmen des ersten Siegelwerkzeugs 8 das Zwischenelement 14 mit erwärmt wird. Während das erste Zwischenelement 14 aus einem elastischen Material besteht, ist das zweite Zwischenelement 15 aus einem wärmeisolierenden oder schlecht wärmeleitenden Material hergestellt.

Bevorzugt wird für das erste Zwischenelement 14 ein Silikon-Elastomer und für das zweite Zwischenelement ein Polyurethan-Elastomer verwendet. Allgemein kann jedoch festgestellt werden, dass das erste Zwischenelement 14 aus einem Material besteht, das eine gegenüber dem Material des zweiten Zwischenelements 15 höhere Elastizität besitzt, während das zweite Zwischenelement 15 aus einem Material besteht, das gegenüber dem Material des ersten Zwischenelements 14 schlechtere Wärmeleiteigenschaften besitzt.

Die Schichtdicke für das erste Zwischenelement 14 ist erfindungsgemäß geringer als die Schichtdicke für das zweite Zwischenelement 15. Ein Erwärmen des ersten Zwischenelements 14 kann hierdurch noch rascher und unmittelbarer erfolgen, während das zweite Zwischenelement 15 aufgrund der gegenüber dem ersten Zwischenelement 14 größeren Dicke den Wärmeabfluss in das zweite Siegelwerkzeug 10 verhindert oder einschränkt. Die Wärme kann somit besser für den Siegelvorgang rückgestaut und im Bereich der zu erzeugenden Siegelnaht appliziert werden.

Das erste Zwischenelement 14 weist vorzugsweise eine oder mehrere Durchgangsöffnungen 20, 21 auf, die in Übereinstimmung mit der oder den Mulden 12, 13 in dem zweiten Siegelwerkzeug 10 ausgebildet sind. Mit anderen Worten weist das erste Zwischenelement 14 bevorzugt eine Mehrzahl von umlaufenden Stegen 22, 23 auf. Das zweite Zwischenelement 15 weist immer eine Mehrzahl von umlaufenden Stegen 24, 25 auf, jeweils entsprechend dem Verlauf der zu bildenden umlaufenden Siegelnähte. Das erste Zwischenelement 14 kann in Form von mehreren separat gebildeten umlaufenden Stegen an dem ersten Siegelwerkzeug 8 angebracht oder einstückig ausgebildet und an dem ersten Siegelwerkzeug angebracht sein. Alternativ kann das erste Zwischenelement 14 plattenförmig ausgebildet sein.

In der in Fig. 2 gezeigten geöffneten Position sind das erste Siegelwerkzeug 8 und das zweite Siegelwerkzeug 10 zur Aufnahme eines Abschnitts der Blisterbahn 5 und eines Abschnitts des Deckmaterials 2 voneinander beabstandet angeordnet. In der in Fig. 3 gezeigten geschlossenen Siegelposition der Siegelvorrichtung liegen die Stege 22 des ersten Zwischenelements 14, die zu siegelnden Abschnitte von Deckmaterial 2 und Blisterbahn 5 und die Stege 24, 25 um die Mulden 12, 13 des zweiten Siegelwerkzeugs 10 direkt aneinander.

Das erste und zweite Siegelwerkzeug 8, 10 werden zum Erzielen der Siegelposition bevorzugt maschinell relativ zueinander bewegt. Dabei kann eines der Siegelwerkzeuge 8, 10 ortsfest sein und nur das andere sich entsprechend bewegen, oder es können sich beide Siegelwerkzeuge 8, 10 aufeinander zu bewegen. Eine konkrete Möglichkeit besteht darin, das obere Siegelwerkzeug 8 unter Verwendung eines Hydraulikzylinders zu bewegen und das untere Siegelwerkzeug 10 unter Verwendung eines Kniehebels zu bewegen. Eine andere konkrete Möglichkeit besteht darin, das obere Siegelwerkzeug 8 und das untere Siegelwerkzeug 10 unter Verwendung eines Doppelexzenter-Mechanismus zu bewegen. Für den Fall, in dem ein Siegelwerkzeug, vorzugsweise das untere Siegelwerkzeug 10, fixiert bzw. ortsfest ist, ist dieses Siegelwerkzeug vorzugsweise federnd gelagert und nur das obere Siegelwerkzeug 8 ist beweglich gelagert.

In der Siegelposition gemäß Fig. 3 kontaktiert das Zwischenelement 14 einen Abschnitt des Deckmaterials 2 und das zweite Zwischenelement 15 des zweiten Siegelwerkzeugs 10 kontaktiert einen Abschnitt der Blisterbahn 5. Dabei drückt das erste Siegelwerkzeug 8 von oben gegen das Deckmaterial 2, das wiederum gegen die Blisterbahn 5 gedrückt wird, die wiederum gegen das als Gegenelement fungierende zweite Siegelwerkzeug 10 gedrückt wird.

In der Siegelposition wird Wärme von dem ersten Siegelwerkzeug 8 auf das Zwischenelement 14 übertragen, das wiederum Wärme auf das Deckmaterial 2 und die Blisterbahn 5 überträgt, sodass das Deckmaterial 2 unter gleichzeitigem Andrücken mit der Blisterbahn 5 verbunden wird.

Nachfolgend wird das Verfahren zum Siegeln des Deckmaterials 2 auf die Blisterbahn 5 in einer Siegelvorrichtung anhand der Fig. 2 und 3 nochmals genauer beschrieben.

Wie in Fig. 2 gezeigt, sind das erste Siegelwerkzeug 8 und das zweite Siegelwerkzeug 10 zunächst voneinander beabstandet angeordnet. In dieser Konfiguration werden ein thermogeformtes Blisterband 5 mit mindestens einem Napf 6 und ein Deckmaterial 2 zwischen dem ersten Siegelwerkzeug 8 und dem zweiten Siegelwerkzeug 10 angeordnet. Wie weiter in Fig. 2 zu sehen ist, liegt der Abschnitt der Blisterbahn 5 dem zweiten Zwischenelement 15 an dem zweiten Siegelwerkzeug 10 gegenüber und der Abschnitt des Deckmaterials 2 liegt dem ersten Zwischenelement 14 an dem ersten Siegelwerkzeug 8 gegenüber.

Ausgehend von dem Zustand in Fig. 2 wird nun die Siegelvorrichtung betätigt, um das erste Siegelwerkzeug 8 und das zweite Siegelwerkzeug 10 relativ zueinander aufeinander zu zu bewegen und in der in Fig. 3 gezeigten Siegelposition anzuordnen. Beim Schließen der Siegelvorrichtung kontaktiert das erste Zwischenelement 14 das Deckmaterial 2 und drückt dieses gegen die Blisterbahn 5. Dabei werden vor allem durch die Elastizität des ersten Zwischenelements 14 etwaige Dickenschwankungen des Deckmaterials 2 kompensiert und das Deckmaterial 2 wird mit gleichmäßigem Druck über die zu siegelnden Abschnitte beaufschlagt.

In der Siegelposition wird auch das zweite Zwischenelement 15 gegen einen Abschnitt der Blisterbahn 5 gedrückt. Spätestens zu diesem Zeitpunkt erfolgt das Erwärmen des ersten Zwischenelements 14, um einen Abschnitt der Blisterbahn 5 mit einem Abschnitt des Deckmaterials 2 zu versiegeln.

Schließlich wird die Siegelvorrichtung betätigt, um das erste Siegelwerkzeug 8 und das zweite Siegelwerkzeug 10 ausgehend von der Darstellung in Fig. 3 wieder beabstandet voneinander anzuordnen. Die Blisterbahn 5 ist nun mit dem Deckmaterial 2 versiegelt und kann aus der Siegelvorrichtung bewegt werden und z.B. einer Stanzeinrichtung zugeführt werden. Die Siegelvorrichtung befindet sich wieder in der in Fig. 2 gezeigten Position.

Das Erwärmen des ersten Zwischenelements 14 erfolgt bevorzugt nur für die Zeitdauer des Heißsiegelvorgangs. Außerhalb des Heißsiegelvorgangs, wenn das erste Siegelwerkzeug 8 und das zweite Siegelwerkzeug 10 voneinander beabstandet sind, wird das erste Siegelwerkzeug 8 nicht bzw. nicht mehr aktiv erwärmt. Das erste Zwischenelement 14 kann aber auch kontinuierlich erhitzt werden.

Fig. 4 zeigt eine schematische Perspektivansicht einer zweiten Ausführungsform der erfindungsgemäßen Siegelvorrichtung. Die Komponenten der Siegelvorrichtung entsprechen den in Fig. 1 bis 3 gezeigten Komponenten und sind daher mit denselben Bezugszeichen versehen, sodass auf deren Beschreibung verzichtet werden kann.

Im Unterschied zu der in Fig. 1 gezeigten Ausführungsform werden anstelle des Blisterbandes 5 einzelne, bereits separierte Blisterhauben 4 mit einem jeweils abgetrennten Abschnitt des Deckmaterials 2 zum Verschließen eines jeweiligen Napfes 6 in der oder den Mulden 12, 13 angeordnet. An sich um die zweiten Zwischenelemente 15 erstreckenden Abschnitten 26 des zweiten Siegelwerkzeugs 10 können Positionierungsstifte 28 nach oben abragend angeordnet sein, die die zu verbindenden Abschnitte des Deckmaterials 2 und die Blisterhauben 4 an einer seitlichen Bewegung hindern. Beim Anordnen der Siegelvorrichtung in der Siegelposition werden die Positionierungsstifte 28 in Öffnungen 30 im ersten Siegelwerkzeug 8 aufgenommen.

## Patentansprüche

1. Siegelvorrichtung zum Siegeln eines Deckmaterials (2) mit schwankender Dicke auf Siegelbereiche einer Blisterbahn (5) oder mindestens einer Blisterhaube (4), wobei die Siegelbereiche der Blisterbahn (5) oder der mindestens einen Blisterhaube (4) mindestens einen Napf (6) zur Aufnahme eines Produkts umgeben, wobei die Siegelvorrichtung aufweist:
ein erstes, beheiztes Siegelwerkzeug (8);
ein zweites Siegelwerkzeug (10), das mindestens eine Mulde (12) zur Aufnahme von mindestens einem Napf (6) der Blisterbahn (5) oder der mindestens einen Blisterhaube (4) aufweist, wobei das erste Siegelwerkzeug (8) und das zweite Siegelwerkzeug (10) einander gegenüberliegend angeordnet sind;
ein erstes Zwischenelement (14) aus einem elastischen Material, wobei das erste Zwischenelement (14) aus einem Silikon-Elastomer besteht und an der dem zweiten Siegelwerkzeug (10) zugewandten Seite an dem ersten Siegelwerkzeug (8) angebracht ist; und
ein zweites Zwischenelement (15) aus einem wärmeisolierenden oder schlecht wärmeleitenden Material, das von dem Material des ersten Zwischenelements (14) verschieden ist;
wobei das erste Siegelwerkzeug (8) mit dem ersten Zwischenelement (14) und das zweite Siegelwerkzeug (10) mit dem zweiten Zwischenelement (15) relativ zueinander zwischen einer geöffneten Position, in der sie zur Aufnahme der Blisterbahn (5) oder der mindestens einen Blisterhaube (4) und mindestens eines Abschnitts des Deckmaterials (2) voneinander beabstandet sind, und einer geschlossenen Siegelposition, in der zumindest Abschnitte des ersten Zwischenelements (14) und des zweiten Zwischenelements (15) Druck aufeinander ausüben, bewegbar sind,
**dadurch gekennzeichnet, dass**
das erste Zwischenelement (14) eine Dicke von 0,3 mm bis 2 mm hat,
das zweite Zwischenelement (15) eine Dicke von 5 mm bis 15 mm hat und an der dem ersten Siegelwerkzeug (8) zugewandten Seite direkt an dem zweiten Siegelwerkzeug (10) angebracht ist, und
das erste Siegelwerkzeug (8) und das zweite Siegelwerkzeug (10) derart eingerichtet sind, dass in der geschlossenen Siegelposition das erste Zwischenelement (14) an dem Deckmaterial (2) anliegt und das zweite Zwischenelement (15) an den Stegen der Blisterbahn (5) oder der Blisterhaube (4) anliegt.

2. Siegelvorrichtung nach Anspruch 1, **dadurch gekennzeichnet, dass** das erste Zwischenelement (14) eine Dicke von 0,5 mm bis 1 mm hat.

3. Siegelvorrichtung nach einem der vorhergehenden Ansprüche, **dadurch gekennzeichnet, dass** das Material des ersten Zwischenelements (14) eine Shore-Härte von 60 bis 80 Shore A, vorzugsweise von 65 bis 75 Shore A hat, gemessen nach DIN 53 505.

4. Siegelvorrichtung nach einem der vorhergehenden Ansprüche, **dadurch gekennzeichnet, dass** das erste Zwischenelement (14) an der Oberfläche des ersten Siegelwerkzeugs (8) angegossen ist.

5. Siegelvorrichtung nach einem der vorhergehenden Ansprüche, **dadurch gekennzeichnet, dass** das zweite Zwischenelement (15) aus einem Polyurethan-Elastomer besteht.

6. Siegelvorrichtung nach einem der vorhergehenden Ansprüche, **dadurch gekennzeichnet, dass** das zweite Zwischenelement (15) eine Dicke von 8 mm bis 12 mm hat.

7. Siegelvorrichtung nach einem der vorhergehenden Ansprüche, **dadurch gekennzeichnet, dass** das Material des zweiten Zwischenelements (15) eine Shore-Härte von 80 bis 100 Shore A, vorzugsweise 85 bis 95 Shore A hat, gemessen nach DIN 53 505.

8. Siegelvorrichtung nach einem der vorhergehenden Ansprüche, **dadurch gekennzeichnet, dass** das Material des zweiten Zwischenelements (15) eine Wärmeleitfähigkeit von zwischen 0,19 W/(m·K) und 0,25 W/(m·K), bevorzugt zwischen 0,21 W/(m·K) und 0,23 W/(m·K) aufweist.

9. Siegelvorrichtung nach einem der vorhergehenden Ansprüche, **dadurch gekennzeichnet, dass** das zweite Zwischenelement (15) an dem zweiten Siegelwerkzeug (10) verschraubt oder verrastet ist.

10. Siegelvorrichtung nach einem der vorhergehenden Ansprüche, **dadurch gekennzeichnet, dass** das erste Zwischenelement (14) mindestens eine Durchgangsöffnung (20) aufweist, die korrelierend mit der mindestens einen Mulde (12) in dem zweiten Siegelwerkzeug (10) ausgebildet ist, und das zweite Zwischenelement (15) mindestens eine Durchgangsöffnung (20, 21) aufweist, wobei das erste Zwischenelement (14) mindestens einen umlaufenden Steg (22, 23) und das zweite Zwischenelement (15) mindestens einen umlaufenden Steg (24, 25) bilden, wobei die umlaufenden Stege (22, 23, 24, 25) miteinander korrelieren und entsprechend dem Verlauf der zu bildenden umlaufenden Siegelnaht ausgebildet sind.

11. Siegelvorrichtung nach einem der Ansprüche 1 bis 9, **dadurch gekennzeichnet, dass** das erste Zwischenelement (14) plattenförmig ausgebildet ist und das zweite Zwischenelement (15) mindestens eine Durchgangsöffnung (20, 21) aufweist, wobei das zweite Zwischenelement (15) mindestens einen umlaufenden Steg (24, 25) bildet, der entsprechend dem Verlauf der zu bildenden umlaufenden Siegelnaht gebildet ist.

12. Verfahren zum Siegeln eines Deckmaterials (2) mit schwankender Dicke auf Siegelbereiche einer Blisterbahn (5) oder mindestens einer Blisterhaube (4), wobei die Siegelbereiche der Blisterbahn (5) oder der mindestens einen Blisterhaube (4) mindestens einen Napf (6) zur Aufnahme eines Produkts umgeben, mit folgenden Schritten:
- Bereitstellen einer Siegelvorrichtung, die aufweist:
ein erstes, beheiztes Siegelwerkzeug (8);
ein zweites Siegelwerkzeug (10), das mindestens eine Mulde (12) zur Aufnahme von mindestens einem Napf (6) der Blisterbahn (5) oder der mindestens einen Blisterhaube (4) aufweist, wobei das erste Siegelwerkzeug (8) und das zweite Siegelwerkzeug (10) einander gegenüberliegend angeordnet sind;
ein erstes Zwischenelement (14) aus einem elastischen Material, das an der dem zweiten Siegelwerkzeug (10) zugewandten Seite an dem ersten Siegelwerkzeug (8) angebracht ist, wobei das erste Zwischenelement (14) aus einem Silikon-Elastomer besteht und eine Dicke von 0,3 mm bis 2 mm hat; und
ein zweites Zwischenelement (15) aus einem wärmeisolierenden Material, das von dem Material des ersten Zwischenelements (14) verschieden ist, wobei das zweite Zwischenelement (15) eine Dicke von 5 mm bis 15 mm hat und an der dem ersten Siegelwerkzeug (8) zugewandten Seite direkt an dem zweiten Siegelwerkzeug (10) angebracht ist;
- Anordnen eines Abschnitts der Blisterbahn (5) oder der mindestens einen Blisterhaube (4) und mindestens eines Abschnitts des Deckmaterials (2) zwischen dem ersten Siegelwerkzeug (8) und dem zweiten Siegelwerkzeug (10), während diese in einer geöffneten Position angeordnet sind;
- Betätigen der Siegelvorrichtung, um das erste Siegelwerkzeug (8) und das zweite Siegelwerkzeug (10) relativ zueinander in eine geschlossene Siegelposition zu bringen, in der das erste Zwischenelement (14) an dem Deckmaterial (2) anliegt und das zweite Zwischenelement (15) an den Stegen der Blisterbahn (5) oder der Blisterhaube (4) anliegt, wodurch im Bereich korrespondierender Abschnitte des ersten und zweiten Zwischenelements (14, 15) das Deckmaterial (2) an die Stege der Blisterbahn (5) oder der Blisterhaube (4) gedrückt wird;
- Erwärmen des ersten Siegelwerkzeugs (8) und des ersten Zwischenelements (14) während oder nach dem Schritt des Betätigens der Siegelvorrichtung, dadurch Erwärmen des Deckmaterials (2) zum Versiegeln des Deckmaterials (2) mit den Stegen der Blisterbahn (5) oder der Blisterhaube (4); und
- Betätigen der Siegelvorrichtung, um das erste Siegelwerkzeug (8) und das zweite Siegelwerkzeug (10) relativ zueinander wieder in die geöffnete Position zu bringen.

13. Verfahren nach Anspruch 12, **dadurch gekennzeichnet, dass** das erste Zwischenelement (14) auf eine Temperatur von zwischen 120°C und 170°C, vorzugsweise zwischen 145°C und 155°C aufgeheizt wird.

## Claims

1. A sealing device for sealing a cover material (2) with fluctuating thickness onto sealing regions of a blister web (5) or of at least one blister cap (4), wherein the sealing regions of the blister web (5) or of the at least one blister cap (4) surround at least one pocket (6) for receiving a product, the sealing device comprising:
a first, heated sealing tool (8);
a second sealing tool (10) which comprises at least one recess (12) for receiving at least one pocket (6) of the blister web (5) or of the at least one blister cap (4), wherein the first sealing tool (8) and the second sealing tool (10) are arranged opposite to one another;
a first intermediate element (14) composed of an elastic material, wherein the first intermediate element (14) is composed of a silicone elastomer and is attached to the first sealing tool (8) on the side facing the second sealing tool (10); and
a second intermediate element (15) composed of a thermally insulating or poorly thermally conductive material which is different from the material of the first intermediate element (14);
wherein the first sealing tool (8) with the first intermediate element (14) and the second sealing tool (10) with the second intermediate element (15) are movable relative to one another between an open position, in which they are spaced apart from one another to accomodate the blister web (5) or the at least one blister cap (4) and at least one portion of the cover material (2), and a closed sealing position, in which at least portions of the first intermediate element (14) and of the second intermediate element (15) exert pressure on one another,
**characterized in that**
the first intermediate element (14) has a thickness of 0.3 mm to 2 mm,
the second intermediate element (15) has a thickness of 5 mm to 15 mm and is attached directly to the second sealing tool (10) on the side facing the first sealing tool (8), and
the first sealing tool (8) and the second sealing tool (10) are configured in such a way that, in the closed sealing position, the first intermediate element (14) bears against the cover material (2) and the second intermediate element (15) bears against the webs of the blister web (5) or of the blister cap (4).

2. The sealing device according to claim 1, **characterized in that** the first intermediate element (14) has a thickness of 0.5 mm to 1 mm.

3. The sealing device according to one of the preceding claims, **characterized in that** the material of the first intermediate element (14) has a Shore hardness of 60 to 80 Shore A, preferably of 65 to 75 Shore A, measured in accordance with DIN 53 505.

4. The sealing device according to one of the preceding claims, **characterized in that** the first intermediate element (14) is cast onto the surface of the first sealing tool (8).

5. The sealing device according to one of the preceding claims, **characterized in that** the second intermediate element (15) is composed of a polyurethane elastomer.

6. The sealing device according to one of the preceding claims, **characterized in that** the second intermediate element (15) has a thickness of 8 mm to 12 mm.

7. The sealing device according to one of the preceding claims, **characterized in that** the material of the second intermediate element (15) has a Shore hardness of 80 to 100 Shore A, preferably 85 to 95 Shore A, measured in accordance with DIN 53 505.

8. The sealing device according to one of the preceding claims, **characterized in that** the material of the second intermediate element (15) has a thermal conductivity of between 0.19 W/(m K) and 0.25 W/(m.K), preferably between 0.21 W/(m·K) and 0.23 W/(m·K).

9. The sealing device according to one of the preceding claims, **characterized in that** the second intermediate element (15) is screw-fastened or latched on the second sealing tool (10).

10. The sealing device according to one of the preceding claims, **characterized in that** the first intermediate element (14) comprises at least one passage opening (20) which is configured to correlate with the at least one recess (12) in the second sealing tool (10), and the second intermediate element (15) comprises at least one passage opening (20, 21), wherein the first intermediate element (14) forms at least one encircling web (22, 23) and the second intermediate element (15) forms at least one encircling web (24, 25), wherein the encircling webs (22, 23, 24, 25) correlate with one another and are configured to correspond to the profile of the encircling sealing seam to be formed.

11. The sealing device according to one of claims 1 to 9, **characterized in that** the first intermediate element (14) is of plate-like configuration and the second intermediate element (15) comprises at least one passage opening (20, 21), wherein the second intermediate element (15) forms at least one encircling web (24, 25) which is formed so as to correspond to the profile of the encircling sealing seam to be formed.

12. A method for sealing a cover material (2) with fluctuating thickness onto sealing regions of a blister web (5) or of at least one blister cap (4), wherein the sealing regions of the blister web (5) or of the at least one blister cap (4) surround at least one pocket (6) for receiving a product, comprising the steps of:
- providing a sealing device which comprises:
a first, heated sealing tool (8);
a second sealing tool (10) which comprises at least one recess (12) for receiving at least one pocket (6) of the blister web (5) or of the at least one blister cap (4), wherein the first sealing tool (8) and the second sealing tool (10) are arranged opposite to one another;
a first intermediate element (14) which is composed of an elastic material and which is attached to the first sealing tool (8) on the side facing the second sealing tool (10), wherein the first intermediate element (14) is composed of a silicone elastomer and has a thickness of 0.3 mm to 2 mm; and
a second intermediate element (15) which is composed of a thermally insulating material which is different from the material of the first intermediate element (14), wherein the second intermediate element (15) has a thickness of 5 mm to 15 mm and is attached directly to the second sealing tool (10) on the side facing the first sealing tool (8);
- arranging a portion of the blister web (5) or of the at least one blister cap (4) and at least one portion of the cover material (2) between the first sealing tool (8) and the second sealing tool (10), while said tools are arranged in an open position;
- actuating the sealing device in order to bring the first sealing tool (8) and the second sealing tool (10) relative to one another into a closed sealing position in which the first intermediate element (14) bears against the cover material (2) and the second intermediate element (15) bears against the webs of the blister web (5) or of the blister cap (4), as a result of which, in the region of corresponding portions of the first and second intermediate elements (14, 15), the cover material (2) is pushed onto the webs of the blister web (5) or of the blister cap (4);
- heating the first sealing tool (8) and the first intermediate element (14) during or after the step of actuating the sealing device, thereby heating the cover material (2) for the purpose of sealing the cover material (2) with the webs of the blister web (5) or of the blister cap (4); and
- actuating the sealing device in order to bring the first sealing tool (8) and the second sealing tool (10) relative to one another back into the open position.

13. The method according to claim 12, **characterized in that** the first intermediate element (14) is heated to a temperature of between 120°C and 170°C, preferably between 145°C and 155°C.

## Revendications

1. Dispositif de scellage pour sceller un matériau de recouvrement (2) d'épaisseur variable sur des zones de scellage d'une bande de blister (5) ou d'au moins une coque de blister (4), les zones de scellage de la bande de blister (5) ou de l'au moins une coque de blister (4) entourant au moins un godet (6) pour recevoir un produit, le dispositif de scellage présentant :
un premier outil de scellage chauffé (8) ;
un deuxième outil de scellage (10), qui présente au moins une cavité (12) pour recevoir au moins un godet (6) de la bande de blister (5) ou de l'au moins une coque de blister (4), le premier outil de scellage (8) et le deuxième outil de scellage (10) étant agencés l'un en face de l'autre ;
un premier élément intermédiaire (14) en un matériau élastique, le premier élément intermédiaire (14) étant constitué d'un élastomère de silicone et étant fixé au premier outil de scellage (8) sur le côté faisant face au deuxième outil de scellage (10) ; et
un deuxième élément intermédiaire (15) en un matériau isolant thermique ou mauvais conducteur thermique, qui est différent du matériau du premier élément intermédiaire (14) ;
le premier outil de scellage (8) avec le premier élément intermédiaire (14) et le deuxième outil de scellage (10) avec le deuxième élément intermédiaire (15) étant mobiles l'un par rapport à l'autre entre une position ouverte dans laquelle ils sont espacés l'un de l'autre pour recevoir la bande de blister (5) ou l'au moins une coque de blister (4) et au moins une section du matériau de recouvrement (2), et une position de scellage fermée dans laquelle au moins des sections du premier élément intermédiaire (14) et du deuxième élément intermédiaire (15) exercent une pression l'une sur l'autre,
**caractérisé en ce que**
le premier élément intermédiaire (14) a une épaisseur de 0,3 mm à 2 mm,
le deuxième élément intermédiaire (15) a une épaisseur de 5 mm à 15 mm et est fixé directement au deuxième outil de scellage (10) sur le côté faisant face au premier outil de scellage (8), et
le premier outil de scellage (8) et le deuxième outil de scellage (10) sont adaptés de telle sorte que, dans la position de scellage fermée, le premier élément intermédiaire (14) s'applique contre le matériau de recouvrement (2) et le deuxième élément intermédiaire (15) s'applique contre les nervures de la bande de blister (5) ou de la coque de blister (4).

2. Dispositif de scellage selon la revendication 1, **caractérisé en ce que** le premier élément intermédiaire (14) a une épaisseur de 0,5 mm à 1 mm.

3. Dispositif de scellage selon l'une quelconque des revendications précédentes, **caractérisé en ce que** le matériau du premier élément intermédiaire (14) a une dureté Shore de 60 à 80 Shore A, de préférence de 65 à 75 Shore A, mesurée selon DIN 53 505.

4. Dispositif de scellage selon l'une quelconque des revendications précédentes, **caractérisé en ce que** le premier élément intermédiaire (14) est moulé sur la surface du premier outil de scellage (8).

5. Dispositif de scellage selon l'une quelconque des revendications précédentes, **caractérisé en ce que** le deuxième élément intermédiaire (15) est constitué d'un élastomère de polyuréthane.

6. Dispositif de scellage selon l'une quelconque des revendications précédentes, **caractérisé en ce que** le deuxième élément intermédiaire (15) a une épaisseur de 8 mm à 12 mm.

7. Dispositif de scellage selon l'une quelconque des revendications précédentes, **caractérisé en ce que** le matériau du deuxième élément intermédiaire (15) a une dureté Shore de 80 à 100 Shore A, de préférence de 85 à 95 Shore A, mesurée selon DIN 53 505.

8. Dispositif de scellage selon l'une quelconque des revendications précédentes, **caractérisé en ce que** le matériau du deuxième élément intermédiaire (15) présente une conductivité thermique comprise entre 0,19 W/(m·K) et 0,25 W/(m·K), de préférence entre 0,21 W/(m-K) et 0,23 W/(m·K).

9. Dispositif de scellage selon l'une quelconque des revendications précédentes, **caractérisé en ce que** le deuxième élément intermédiaire (15) est vissé ou encliqueté sur le deuxième outil de scellage (10).

10. Dispositif de scellage selon l'une quelconque des revendications précédentes, **caractérisé en ce que** le premier élément intermédiaire (14) présente au moins une ouverture de passage (20) qui est formée en corrélation avec l'au moins une cavité (12) dans le deuxième outil de scellage (10), et le deuxième élément intermédiaire (15) présente au moins une ouverture de passage (20, 21), le premier élément intermédiaire (14) formant au moins une nervure périphérique (22, 23) et le deuxième élément intermédiaire (15) formant au moins une nervure périphérique (24, 25), les nervures périphériques (22, 23, 24, 25) étant formées en corrélation l'une avec l'autre et en fonction du tracé du joint de scellage périphérique à former.

11. Dispositif de scellage selon l'une quelconque des revendications 1 à 9, **caractérisé en ce que** le premier élément intermédiaire (14) est réalisé en forme de plaque et le deuxième élément intermédiaire (15) présente au moins une ouverture de passage (20, 21), le deuxième élément intermédiaire (15) formant au moins une nervure périphérique (24, 25) qui est formée en fonction du tracé du joint de scellage périphérique à former.

12. Procédé de scellage d'un matériau de recouvrement (2) d'épaisseur variable sur des zones de scellage d'une bande de blister (5) ou d'au moins une coque de blister (4), les zones de scellage de la bande de blister (5) ou de l'au moins une coque de blister (4) entourant au moins un godet (6) pour recevoir un produit, avec les étapes suivantes :
- la fourniture d'un dispositif de scellage, qui présente :
un premier outil de scellage chauffé (8) ;
un deuxième outil de scellage (10) qui présente au moins une cavité (12) pour recevoir au moins un godet (6) de la bande de blister (5) ou de l'au moins une coque de blister (4), le premier outil de scellage (8) et le deuxième outil de scellage (10) étant agencés l'un en face de l'autre ;
un premier élément intermédiaire (14) en un matériau élastique, qui est fixé au premier outil de scellage (8) sur le côté faisant face au deuxième outil de scellage (10), le premier élément intermédiaire (14) étant constitué d'un élastomère de silicone et ayant une épaisseur de 0,3 mm à 2 mm ; et
un deuxième élément intermédiaire (15) en un matériau isolant thermique qui est différent du matériau du premier élément intermédiaire (14), le deuxième élément intermédiaire (15) ayant une épaisseur de 5 mm à 15 mm et étant directement fixé au deuxième outil de scellage (10) sur le côté faisant face au premier outil de scellage (8) ;
- l'agencement d'une section de la bande de blister (5) ou de l'au moins une coque de blister (4) et d'au moins une section du matériau de recouvrement (2) entre le premier outil de scellage (8) et le deuxième outil de scellage (10), pendant que ceux-ci sont agencés dans une position ouverte ;
- l'actionnement du dispositif de scellage pour amener le premier outil de scellage (8) et le deuxième outil de scellage (10) dans une position de scellage fermée l'un par rapport à l'autre, dans laquelle le premier élément intermédiaire (14) s'applique contre le matériau de recouvrement (2) et le deuxième élément intermédiaire (15) s'applique contre les nervures de la bande de blister (5) ou de la coque de blister (4), le matériau de recouvrement (2) étant ainsi pressé sur les nervures de la bande de blister (5) ou de la coque de blister (4) dans la zone de sections correspondantes du premier et du deuxième élément intermédiaire (14, 15) ;
- le chauffage du premier outil de scellage (8) et du premier élément intermédiaire (14) pendant ou après l'étape d'actionnement du dispositif de scellage, ainsi le chauffage du matériau de recouvrement (2) pour sceller le matériau de recouvrement (2) aux nervures de la bande de blister (5) ou de la coque de blister (4) ; et
- l'actionnement du dispositif de scellage pour ramener le premier outil de scellage (8) et le deuxième outil de scellage (10) dans la position ouverte l'un par rapport à l'autre.

13. Procédé selon la revendication 12, **caractérisé en ce que** le premier élément intermédiaire (14) est chauffé à une température comprise entre 120 °C et 170 °C, de préférence entre 145 °C et 155 °C.
